# EUROPEAN PATENT APPLICATION

(11) **EP 0 675 522 A2**
(43) Date of publication of application: **04.10.1995**
(21) Application number: 95301683.9
(22) Date of filing: 14.03.1995
(51) Int. Cl.: H01J 61/32, H01J 61/56, H01J 61/35

(54) **Single-ended discharge lamp**

(30) Priority: 29.03.1994 HU 9400885
(71) Applicant: TUNGSRAM Részvénytársaság, H-1340 Budapest IV (HU)
(72) Inventor: Balazs, Laszlo, Budapest 1133 (HU); Lantos, Ferenc, Budapest 1132 (HU); Abásari, Emöke, Budapest 1046 (HU); Cserteg, Istvánné, Budapest 1046 (HU); Bobayné, Veronika Vass, Budapest 1046 (HU)
(74) Representative: Pratt, Richard Wilson

(57) **Abstract**

A single-ended low-pressure mercury vapor discharge lamp comprises a discharge vessel (2) having at least two tube portions (3,3') and containing a fill, a ballast housing (4) and a lamp cap (10). The tube portions (3,3') have end portions (8,8') within the housing (4), which supports the discharge vessel (2).

The end portions (8,8') of the discharge vessel (2), within the housing (4) have a light-reflecting layer (12,12') preferably on the outer surface of the end portions to reflect, out of the housing, light which would otherwise be lost in the housing.

## Description

The present invention relates to a single-ended discharge lamp such as a compact fluorescent lamp.

It is known to provide a single-ended low-pressure mercury vapor discharge lamp comprising a discharge vessel having at least two tube portions connected together to defined a continuous discharge path, and a lamp cap for electrical and mechanical connection of the lamp to a lampholder and a housing from which the discharge vessel extends and containing circuitry for energising the discharge vessel and electrically coupling the discharge vessel to the connecting means.

It is also known to provide such a lamp having a discharge vessel supported by a base which plugs into a separate energising circuit. It is advantageous to use such lamps in place of conventional incandescent lamps. The reason for this is that such lamps are similar in size to incandescent lamps, have luminous efficiencies many times that of the incandescent lamps and have considerably longer lives than incandescent lamps. It is known that the luminous efficiency is dependent upon e.g. choosing appropriate phosphors, providing a phosphor coating which is as uniform as possible, and choosing an appropriate frequency operation of the electronic energising circuitry.

The present invention seeks to improve the efficiency of a single-ended discharge lamp.

In accordance with one aspect of the present invention, there is provided a single-ended low-pressure mercury vapor discharge lamp comprising a discharge vessel composed of at least two tube portions being connected with each other and dosed with additive and gas, and a cap part where the cap part is made in a manner suitable for electrical and mechanical connection to a lampholder on one hand, and for mechanically fixing and making electrical contact with the discharge vessel on the other, and the outside of those end portions of the tube portions of the discharge vessel, which end portions being adjacent to the cap part are coated with a light-reflecting layer.

In accordance with another aspect of the present invention, loss of light from the discharge lamp is reduced by providing a light reflective layer on at least some of the end portions of the discharge tube which are within the housing of the discharge lamp or within the base of the lamp.

The said housing, or the said base or the said cap part form a support for the discharge vessel. Such a lamp may have one to four pairs of tube portions connected together to form the discharge vessel, each tube portion having an end portion within the support.

Preferably all the end portions are provided with the reflective layer.

With a discharge lamp according to the invention a substantial increase in luminous flux is achieved because the light-reflecting layer reflects that portion of light from the discharge which would otherwise be lost through the exhaust tube studs and the pinched ends of the discharge vessel which are within the support. The coating may be applied to the ready-made discharge vessel. The light-reflecting layer is preferably on the outside of the discharge vessel to prevent reaction with the mercury dose, the discharge and/or the glass material with which it may otherwise react under the operating conditions inside the vessel.

In a preferred embodiment of the discharge lamp according to the invention the tube end-portions within the support are coated with the light-reflecting layer which extends slightly beyond surface of the support. It is not desirable to coat the end portions substantially beyond the surface of the support, because a light-reflecting layer outside the support would shade rather than reflect. To achieve the highest possible efficiency, it is preferable to coat the entire surface of the end portions within the support.

The light reflective layer may comprise grains and it is also preferable to choose a grain size between 0.2 and 0.3 microns for the light-reflecting layer for efficient light reflection. The limit values are interpreted so that the peak of the grain size distribution curve is between these two values.

For the light-reflecting layer, various suitable material can be used. For example a layer of, or containing, titanium dioxide can be used due to its advantageous properties. The surface density of the layer comprising titanium dioxide is preferably chosen to be between 2 and 10 mg/cm².

We have found that a single-ended low pressure mercury vapor discharge lamp according to the invention exhibits 1-4% higher luminous flux and efficiency than an equivalent single-ended low-pressure mercury vapor discharge lamps without the reflective layer. This improvement is of particular importance in the case of discharge lamps having six or eight tube portions.

For a better understanding of the present invention, reference will now be made, by way of example, to the accompanying drawings in which :-

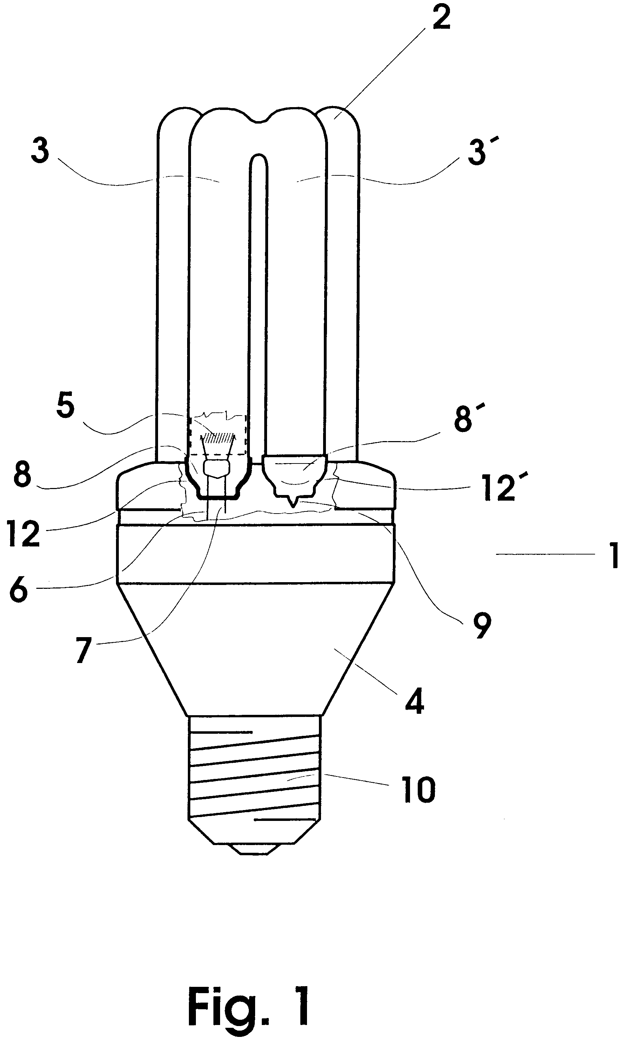

FIG 1 shows in partial section, an embodiment of a discharge lamp according to the invention.

In FIG. 1, a low-pressure mercury vapor discharge lamp 1 comprises a discharge vessel, a ballast housing 4 and a lamp cap 10. The discharge vessel 2 comprises, for example, eight straight tube portions 3,3' upstanding from the housing 4 parallel to, and connected with, each other to define, as known, a continuous discharge path between the electrodes 5 of the vessel. The vessel 2 is coated on the inside with phosphor and contains a fill including mercury and a noble gas. At the end portions of two of the tube portions 3 are the electrodes 5, the lead-wires 6,7 of which are sealed in a pinch seal 8. The ends of the other tube portions 3' having no electrodes have respective pinch seals 8' except for one which has a tipped-off exhaust tube stud shown schematically at reference 9. The tube portions 3, 3' are mechanically supported in the housing 4 which also contains, in this example, an electronic circuit or ballast for energising the discharge vessel 2. The lamp cap 10 may be screw threaded as shown or be a bayonet connector as known.

The end portion of each tube portion 3,3' (including the pinched portions 8,8' and the tipped-off exhaust tube stud) are provided with a light-reflecting layer 12,12'. The reflecting layer 12,12' extends at least to the surface of the housing 4 with each tube portion. As shown in the Figure the reflecting layer 12,12' extends slightly beyond the surface of the housing 4.

The reflecting layer 12,12' is on the external surface of the end portions of the discharge tube. Thus, the appearance of the lamp is substantially unaffected since the light-reflecting layer 12,12' is substantially hidden by the housing 11. The layer 12,12' comprises grains of titanium dioxide, zirconium dioxide, barium sulfate or a mixture thereof. Other suitable materials could also be used. The layer is applied by means of dipping, pouring, spraying or any other suitable known, method. The grain size of the layer is in the range 0.2 to 0.3 microns. Preferably, the average grain size of the layer 12,12' is 0.25 microns. In the case of titanium dioxide, the material is applied with a surface density in the range of 2 to 10 mg/cm².

## Claims

1. A single-ended discharge lamp comprising a discharge vessel having a plurality of end portions supported inside a support, characterised in that the said end portions of the discharge vessel which are inside the support each have a light reflective layer which reflects light out of the support.

2. A lamp according to Claim 1, wherein the discharge vessel comprises 1 to 4 pairs of tube portions connected together to define a continuous discharge path, the tube portions each having an end portion supported in the support, a plurality of the end portions having the light reflective layer.

3. A lamp according to Claim 2, wherein all the said end portions of the tube portions have the light reflective layer.

4. A lamp according to Claim 1, 2 or 3 wherein the light reflective layer comprises a light reflective coating on the outside of each end portion.

5. A lamp according to Claim 1, 2, 3 or 4 wherein the support comprises an external surface from which the discharge vessel upstands, and the light reflective layer extends slightly above the external surface.

6. A lamp according to any preceding claim, wherein the light reflective layer comprises grains of size in the range 0.2 to 0.3 microns.

7. A lamp according to any preceding claim wherein the light reflective layer comprises titanium dioxide, zirconium dioxide, barium sulfate or mixtures thereof.

8. A lamp according to Claim 7 wherein the light reflective layer comprises titanium dioxide and has a density of 2 to 10 mg/cm².

9. A lamp according to any preceding claim, wherein the support comprises a lamp cap and a housing containing means for energising the lamp.

10. A lamp according to any preceding claim, which is a single-ended low-pressure mercury vapor discharge lamp, the discharge vessel containing a fill for supporting a discharge therein and a luminescent layer on the inner surface of the vessel.
